# EUROPÄISCHE PATENTSCHRIFT

(11) **EP 3 994 506 B1**
(45) Veröffentlichungstag und Bekanntmachung des Hinweises auf die Patenterteilung: **24.07.2024**
(21) Anmeldenummer: 20726827.7
(22) Anmeldetag: 20.05.2020
(51) Int. Cl.: G02B 5/08, G02B 5/30, G02B 27/01, B32B 17/10, C03C 17/36, C03C 17/34, C03C 27/10

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED IRRADIATION
DISPOSITIF DE PROJECTION POUR UN AFFICHAGE TÊTE HAUTE (HUD) À RAYONNEMENT P-POLARISÉ

(30) Priorität: 05.07.2019 EP 19184617
(43) Veröffentlichungstag der Anmeldung: 11.05.2022
(73) Patentinhaber: SAINT-GOBAIN GLASS FRANCE, 92400 Courbevoie (FR)
(72) Erfinder: FISCHER, Klaus, 52477 Alsdorf (DE); HAGEN, Jan, 53123 Bonn (DE)
(74) Vertreter: Feist, Florian Arno
(86) Internationale Anmeldenummer: PCT/EP2020/064022
(87) Internationale Veröffentlichungsnummer: WO 2021/004685

(56) Entgegenhaltungen:
- EP-A2- 3 187 917
- WO-A1-2017/198363
- DE-U1- 202019 102 388
- US-A1- 2009 153 962
- US-A1- 2017 361 687

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (57,2° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird. Ein weiteres HUD mit p-polarisierter Strahlung und Reflexionsbeschichtung ist aus US2017242247A1 bekannt.

US2014340759A1 offenbart einen Combiner eines Head-Mounted-Displays, der mit einer Reflexionsbeschichtung ausgestattet ist. Die Reflexionsbeschichtung weist dielektrische Schichtenfolgen ober- und unterhalb einer elektrisch leitfähigen Schicht auf. Die dielektrischen Schichtenfolgen sind in Ausführungsformen aus n optisch hochbrechenden Schichten und (n+1) optisch niedrigbrechenden Schichten ausgebildet, die alternierend angeordnet sind.

US2009153962A1 offenbart ein HUD mit p-polarisierter Strahlung und einer Beschichtung aus zwei polarisationsändernden Schichten und einer dazwischenliegenden Schicht mit einem Brechungsindex, der sich vom Brechungsindex der polarisationsändernden Schichten unterscheidet. In einer Ausgestaltung kann die dazwischenliegende Schicht eine elektrisch leitfähige Schicht aus Indiumzinnoxid sein. Die polarisationsändernden Schichten sind als gereckte Polymerfilme ausgebildet.

EP3187917A2 offenbart ein HUD mit p-polarisierter Strahlung und einer Reflexionsbeschichtung, welche mindestens eine metallische Schicht zwischen dielektrischen Schichten umfasst. Als Materialien für die dielektrischen Schichten werden ZnSnMgOₓ, ZnSnOₓ, ZnO, SnO₂, TiO₂, Si₃N₄ und AIN. Dabei handelt es sich um optisch hochbrechende Materialien mit einem Brechungsindex von größer 1,8.

DE202019102388U1 offenbart eine Windschutzscheibe mit einer elektrisch leitfähigen Beschichtung. Die Windschutzscheibe ist mit einer Kamera ausgestattet und im Bereich der Kamera mit einem dielektrischen Übergitter versehen, welches als eine Art Bandsperrfilter vor der Kamera wirkt, um negative Auswirkungen der elektrisch leitfähigen Beschichtung auf die Funktionsfähigkeit der Kamera zu mindern. Das Übergitter ist aus alternierend angeordneten dielektrischen Schichten mit unterschiedlichen Brechungsindices gebildet und weist keine elektrisch leitfähigen Schichten auf.

WO2017198363A1 offenbart ein HUD mit s-polarisierter Strahlung und einer elektrisch leitfähigen Beschichtung. Die elektrisch leitfähige Beschichtung umfasst mindestens eine elektrisch leitfähige Schicht und dielektrische Schichten, für die übliche optisch hochbrechende Materialien mit einem Brechungsindex von größer 1,8 vorgeschlagen werden.

US2017361687A1 offenbart eine thermoplastische Zwischenschicht für eine Verbundscheibe, die für ein HUD verwendet werden kann. Die Zwischenschicht umfasst zwei polymere Schichten aus Polyvinylacetal und eine dazwischenliegende polarisationsändernde polymere Schicht.

Es besteht Bedarf an Projektionsanordnungen für HUDs mit Reflexionsbeschichtungen, die eine hohe Transmission im sichtbaren Spektralbereich gewährleisten sowie eine hohe Reflektivität gegenüber p-polarisierter Strahlung aufweisen und eine farbneutrale Darstellung erlauben. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Erfindungsgemäß wird p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (57,2°, Kalk-Natron-Glas) relativ nahekommt, wird p-polarisierte Strahlung von den Scheibenoberflächen kaum reflektiert, sondern hauptsächlich von der leitfähigen Beschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken. Die erfindungsgemäße Reflexionsbeschichtung bewirkt eine hohe Reflektivität gegenüber p-polarisierter Strahlung im Spektralbereich von 450 nm bis 650 nm, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht. Die einzelne elektrisch leitfähige Schicht der Reflexionsbeschichtung bewirkt eine Glättung des Reflexionsspektrums im relevanten Spektralbereich, so dass eine farbneutrale Darstellung gewährleistet ist. Gleichzeitig setzt die einzelne leitfähige Schicht die Transmission nicht übermäßig herab, so dass die Scheibe weiterhin als Windschutzscheibe verwendet werden kann. Das sind große Vorteile der vorliegenden Erfindung.

Die erfindungsgemäße Projektionsanordnung für ein Head-Up-Display (HUD) umfasst mindestens eine Windschutzscheibe, die mit einer Reflexionsbeschichtung versehen ist, und einen Projektor (HUD-Projektor). Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Kraftfahrzeugs, insbesondere eines Personen- oder Lastkraftwagens.

Die Windschutzscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Windschutzscheibe gerichtet. Er bestrahlt den HUD-Bereich mit Strahlung im sichtbaren Bereich des elektromagnetischen Spektrums zur Erzeugung der HUD-Projektion, insbesondere im Spektralbereich von 450 nm bis 650 nm, beispielsweise mit den Wellenlängen 473 nm, 550 nm und 630 nm (RGB). Die Strahlung des Projektors ist überwiegend p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Die Reflexionsbeschichtung gemäß Anspruch 1 weist genau eine elektrisch leitfähige Schicht auf. Unterhalb und oberhalb der elektrisch leitfähigen Schicht ist jeweils eine dielektrische Schichtenfolge angeordnet. Die beiden dielektrischen Schichtenfolgen umfassen n optisch niedrigbrechenden Schichten mit einem Brechungsindex kleiner 1,8 und (n+1) optisch hochbrechenden Schichten mit einem Brechungsindex größer 1,8, die jeweils alternierend angeordnet sind. *n* ist eine ganze Zahl größer oder gleich 1.

Innerhalb der dielektrischen Schichtenfolgen folgt von unten nach oben zunächst eine optisch hochbrechende Schicht, dann eine optisch niedrigbrechende Schicht und dann eine optisch hochbrechende Schicht. Ist n > 1, so folgen entsprechend weitere optisch niedrigbrechende und hochbrechende Schichten. In einer bevorzugten Ausgestaltung besteht die Reflexionsbeschichtung lediglich aus der elektrisch leitfähigen Schicht, den n optisch niedrigbrechenden dielektrischen Schichten und den (n+1) optisch hochbrechenden dielektrischen Schichten. Die optisch niedrigbrechenden Schichten stehen dann mit den benachbarten optisch hochbrechenden Schichten in direktem Kontakt. Die elektrisch leitfähige Schicht steht mit der obersten optisch hochbrechenden Schicht der unteren dielektrischen Schichtenfolge und mit der untersten optisch hochbrechenden Schicht der oberen dielektrischen Schichtenfolge in direktem Kontakt.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Die angegebenen Werte für Brechungsindizes sind bei einer Wellenlänge von 550 nm gemessen.

Die Reflexionsbeschichtung ist bevorzugt auf einer der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist.

Die erfindungsgemäße Reflexionsbeschichtung weist aufgrund der elektrisch leitfähigen Schicht IR-reflektierende Eigenschaften auf, so dass sie als Sonnenschutzbeschichtung fungiert, welche die Aufheizung des Fahrzeuginnenraums durch Reflexion der Wärmestrahlung verringert. Die Reflexionsbeschichtung kann auch als Heizbeschichtung verwendet werden, wenn sie elektrisch kontaktiert wird, so dass ein Strom durch sie fließt, welcher die Reflexionsbeschichtung erwärmt.

Die mit der Reflexionsbeschichtung versehene Windschutzscheibe weist bevorzugt im Spektralbereich von 450 nm bis 650 nm, der für die Darstellung von HUD-Projektoren besonders interessant ist, einen gemittelten Reflexionsgrad gegenüber p-polarisierter Strahlung von mindestens 10% auf, besonders bevorzugt von mindestens 15%, ganz besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 450 nm bis 650 nm mindestens 10 %, bevorzugt mindestens 15 %, besonders bevorzugt 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 450 nm bis 650 nm sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 5 % betragen, besonders bevorzugt höchstens 3 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der erfindungsgemäßen Reflexionsbeschichtung aufgrund ihrer elektrisch leitfähigen Schicht problemlos erreicht werden. Die elektrisch leitfähige Schicht führt zu einer Glättung des Spektrums.

Die oben genannten gewünschten Reflexionscharakteristika werden insbesondere durch die Wahl der Materialien und Dicken der Einzelschichten sowie den Aufbau der dielektrischen Schichtenfolgen erreicht. Die Reflexionsbeschichtung kann so geeignet eingestellt werden.

Die Reflexionsbeschichtung ist ein Dünnschichtstapel, also eine Schichtenfolge dünner Einzelschichten. Dieser Dünnschichtstapel enthält genau eine elektrisch leitfähige Schicht. Die Reflexionsbeschichtung enthält also nicht mehr als eine elektrisch leitfähige Schicht, und auch oberhalb oder unterhalb der Reflexionsbeschichtung sind keine weiteren elektrisch leitfähigen Schichten angeordnet. Es ist ein besonderer Vorteil der vorliegenden Erfindung, dass mit einer einzelnen leitfähigen Schicht die gewünschten Reflexionseigenschaften erreicht werden können, ohne dass die Transmission zu stark herabgesetzt würde, wie es bei der Verwendung mehrerer leitfähiger Schichten der Fall wäre.

Die elektrisch leitfähige Schicht ist insbesondere eine metallhaltige Schicht. Die elektrisch leitfähige Schicht ist bevorzugt auf Basis von Silber ausgebildet. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Alternativ können aber auch andere elektrisch leitfähige Materialien vorgesehen sein, beispielsweise Gold, Kupfer oder Aluminium, oder transparente leitfähige Oxide (TCO) wie Indium-Zinnoxid (ITO). Die Schichtdicke der leitfähigen Schicht beträgt bevorzugt höchstens 15 nm, besonders bevorzugt höchstens 14 nm, ganz besonders bevorzugt höchstens 13 nm. Dadurch kann der gewünschte Glättungseffekt im Hinblick auf das Reflexionsspektrum ebenso erreicht werden wie eine vorteilhafte Reflektivität im IR-Bereich, ohne die Transmission zu stark herabzusetzen. Die Schichtdicke der leitfähigen Schicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die Schichtdicke der leitfähigen Schichten von 8 nm bis 14 nm oder von 8 nm bis 13 nm.

Dicke oder Schichtdicke bezieht sich im Rahmen der vorliegenden Erfindung auf die geometrische Dicke, nicht etwa die optische Dicke, welche sich als Produkt aus Brechungsindex und geometrischer Dicke ergibt.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Die elektrisch leitfähige Schicht ist im Zentrum der Reflexionsbeschichtung angeordnet, welche symmetrisch um die elektrisch leitfähige Schicht aufgebaut ist. Dadurch wird die gewünschte Reflexionscharakteristik erreicht. Oberhalb und unterhalb der elektrisch leitfähigen Schicht ist jeweils eine dielektrische Schichtenfolge aus n optisch niedrigbrechenden Schichten mit einem Brechungsindex kleiner 1,8 und (n+1) optisch hochbrechenden Schichten mit einem Brechungsindex größer 1,8 angeordnet sind. Die hoch- und niedrigbrechenden Schichten sind jeweils alternierend angeordnet sind, wobei n eine ganze Zahl größer oder gleich 1 ist. Jede dielektrische Schichtenfolge hat also mindestens den folgenden Aufbau und besteht bevorzugt nur aus den angegebenen Schichten (von unten nach oben ausgehend vom Substrat):
- optisch hochbrechende Schicht (Brechungsindex größer 1,8)
- optisch niedrigbrechende Schicht (Brechungsindex kleiner 1,8)
- optisch hochbrechende Schicht (Brechungsindex größer 1,8)

In einer bevorzugten Ausgestaltung beträgt die Zahl *n* der dielektrischen Schichtenfolge 1. Dieser einfachste mögliche Aufbau der erfindungsgemäßen Beschichtung ist herstellungsbedingt und aus Kostengründen bevorzugt und die angestrebten Reflexionscharakteristika sind mit ihm realisierbar. Die Reflexionsbeschichtung weist dann den folgenden Schichtaufbau auf und besteht bevorzugt nur aus den angegebenen Schichten (ausgehend vom Substrat, auf dem die Beschichtung aufgebracht ist):
- eine erste optisch hochbrechende Schicht
- eine erste optisch niedrigbrechende Schicht
- eine zweite optisch hochbrechende Schicht
- die elektrisch leitfähige Schicht
- eine dritte optisch hochbrechende Schicht
- eine zweite optisch niedrigbrechende Schicht
- eine vierte optisch hochbrechende Schicht

Die optisch hoch- und niedrigbrechenden Schichten sind dielektrische Schichten. Durch ihren alternierenden Aufbau kann das Reflexionsverhalten infolge von Interferenzeffekten gezielt eingestellt werden, insbesondere durch Wahl der Materialien und Schichtdicken. So ist es möglich, eine Reflexionsbeschichtung zu realisieren mit effektiver Reflexion gegenüber p-polarisierter Strahlung im sichtbaren Spektralbereich. Daneben hat auch die Qualität des Materials der elektrisch leitfähigen Schicht (beispielsweise die Reinheit des Metalls) einen Einfluss auf die Reflexionscharakteristik.

Die optisch hochbrechenden Schichten sind bevorzugt auf Basis von Siliziumnitrid, Zinn-Zink-Oxid, Silizium-Zirkonium-Nitrid, Zirkoniumoxid, Nioboxid, Hafniumoxid, Tantaloxid, Wolframoxid, Titanoxid, Siliziumkarbid oder Diamond-like carbon (DLC) ausgebildet, besonders bevorzugt auf Basis von Siliziumnitrid. Die optisch niedrigbrechenden Schichten sind bevorzugt auf Basis von Siliziumoxid, Aluminiumoxid, Magnesiumfluorit, Siliziumoxinitrid oder Calciumfluorit ausgebildet, besonders bevorzugt auf Basis von Siliziumoxid. Damit werden gute Ergebnisse erzielt. Die genannten Oxide und Nitride können stöchiometrisch, unterstöchiometrisch oder überstöchiometrisch abgeschieden sein. Sie können Dotierungen aufweisen.

Es hat sich gezeigt, dass besonders gute Ergebnisse erzielt werden, wenn die unterste optisch niedrigbrechende Schicht relativ dünn ausgebildet wird mit einer Schichtdicke von höchstens 50 nm, bevorzugt höchstens 30 nm. Die übrigen dielektrischen Schichten weisen bevorzugt eine Dicke von 150 nm bis 400 nm auf. Die Zahl *n* der dielektrischen Schichtenfolgen beträgt dabei bevorzugt 1.

Die Reflexionsbeschichtung mit den erfindungsgemäßen Reflexionscharakteristika ist grundsätzlich auf verschiedene Arten realisierbar, bevorzugt unter Verwendung der vorstehend beschriebenen Schichten, so dass die Erfindung nicht auf eine bestimmte Schichtenfolge eingeschränkt ist. Nachfolgend wird eine besonders bevorzugte Ausgestaltung der Beschichtung vorgestellt, mit der besonders gute Ergebnisse erzielt werden, insbesondere bei einem typischen Einfallswinkel der Strahlung von etwa 65°. Die Zahl *n* der dielektrischen Schichtenfolge beträgt dabei 1 und die Reflexionsbeschichtung weist dann den folgenden Schichtaufbau auf (ausgehend vom Substrat, auf dem die Beschichtung aufgebracht ist):
- eine erste optisch hochbrechende Schicht auf Basis von Siliziumnitrid, Zinn-Zink-Oxid, Silizium-Zirkonium-Nitrid oder Titanoxid, insbesondere Siliziumnitrid, mit einer Dicke von 235 nm bis 355 nm, bevorzugt von 270 nm bis 320 nm, insbesondere von 295 nm bis 300 nm (beispielsweise etwa 298 nm);
- eine erste optisch niedrigbrechende Schicht auf Basis von Siliziumoxid mit einer Dicke von 15 nm bis 30 nm, bevorzugt von 20 bis 25 nm (beispielsweise etwa 22 nm);
- eine zweite optisch hochbrechende Schicht auf Basis von Siliziumnitrid, Zinn-Zink-Oxid, Silizium-Zirkonium-Nitrid oder Titanoxid, insbesondere Siliziumnitrid, mit einer Dicke von 165 nm bis 245 nm, bevorzugt von 185 nm bis 225 nm, insbesondere von 205 nm bis 210 nm (beispielsweise etwa 206 nm);
- die elektrisch leitfähige Schicht, bevorzugt auf Basis von Silber und bevorzugt mit einer Dicke von 5 nm bis 15 nm, insbesondere von 8 nm bis 13 nm;
- eine dritte optisch hochbrechende Schicht auf Basis von Siliziumnitrid, Zinn-Zink-Oxid, Silizium-Zirkonium-Nitrid oder Titanoxid, insbesondere Siliziumnitrid, mit einer Dicke von 155 nm bis 235 nm, bevorzugt von 175 nm bis 215 nm, insbesondere von 195 nm bis 200 nm (beispielsweise etwa 196 nm);
- eine zweite optisch niedrigbrechende Schicht auf Basis von Siliziumoxid mit einer Dicke von 170 nm bis 255 nm, bevorzugt von 190 bis 235 nm, insbesondere von 210 nm bis 215 nm (beispielsweise etwa 214 nm);
- eine vierte optisch hochbrechende Schicht auf Basis von Siliziumnitrid, Zinn-Zink-Oxid, Silizium-Zirkonium-Nitrid oder Titanoxid, insbesondere Siliziumnitrid, mit einer Dicke von 210 nm bis 315 nm, bevorzugt von 235 nm bis 290 nm, insbesondere von 260 nm bis 265 nm (beispielsweise etwa 262 nm).

Die Reflexionsbeschichtung besteht bevorzugt aus den angegeben Schichten und weist keine weiteren Schichten auf.

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist gemäß Anspruch 1 überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Windschutzscheibe im geometrischen Zentrum des bestrahlten Bereichs aufgespannt.

Die Polarisation, also insbesondere der Anteil an p- und s-polarisierter Strahlung, wird an einem Punkt des HUD-Bereichs bestimmt, bevorzugt im geometrischen Zentrum des HUD-Bereichs. Da Windschutzscheiben üblicherweise gekrümmt sind, was Auswirkungen auf die Einfallsebene der Projektorstrahlung hat, können in den übrigen Bereichen leicht davon abweichende Polarisationsanteile auftreten, was aus physikalischen Gründen unvermeidlich ist.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus einer thermoplastischen Folie ausgebildet. Die Dicke der Zwischenschicht beträgt bevorzugt von 0,2 mm bis 2 mm, besonders bevorzugt von 0,3 mm bis 1 mm.

Die Windschutzscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung wird bevorzugt durch physikalische Gasphasenabscheidung (PVD) auf eine Scheibenoberfläche aufgebracht, besonders bevorzugt durch Kathodenzerstäubung ("Sputtern"), ganz besonders bevorzugt durch magnetfeldunterstütze Kathodenzerstäubung. Die Beschichtung wird bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Windschutzscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst außerdem die Verwendung einer erfindungsgemäß ausgebildeten Windschutzscheibe als Projektionsfläche einer Projektionsanordnung für ein Head-Up-Display, wobei ein Projektor auf den HUD-Bereich gerichtet ist, dessen Strahlung überwiegend p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Kraftfahrzeug, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung der erfindungsgemäßen Reflexionsbeschichtung auf einer Innenscheibe und
- Fig. 5: Reflexionsspektren von Verbundscheiben gegenüber p-polarisierter Strahlung gemäß fünf erfindungsgemäßen Beispielen und zweier Vergleichsbeispiele.

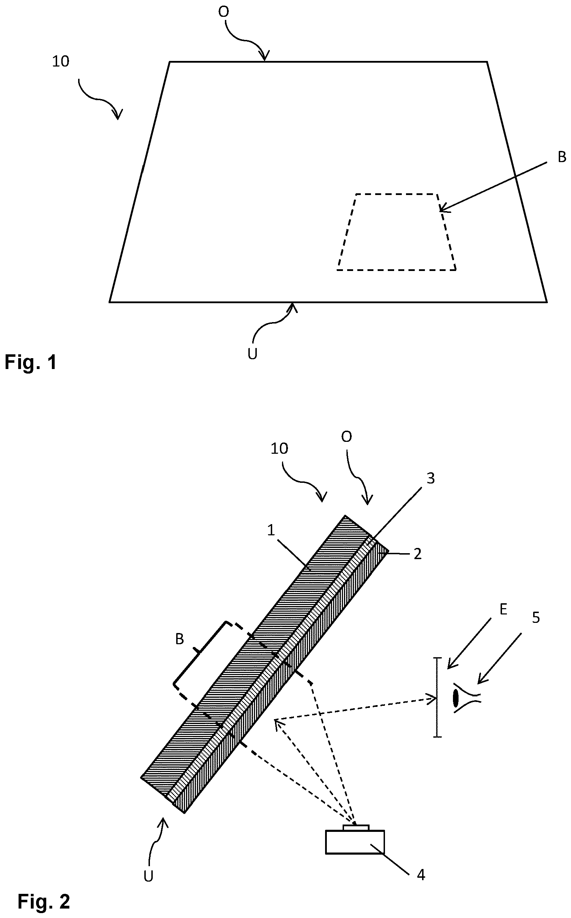

Fig. 1 und Fig. 2 zeigen je ein Detail einer gattungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

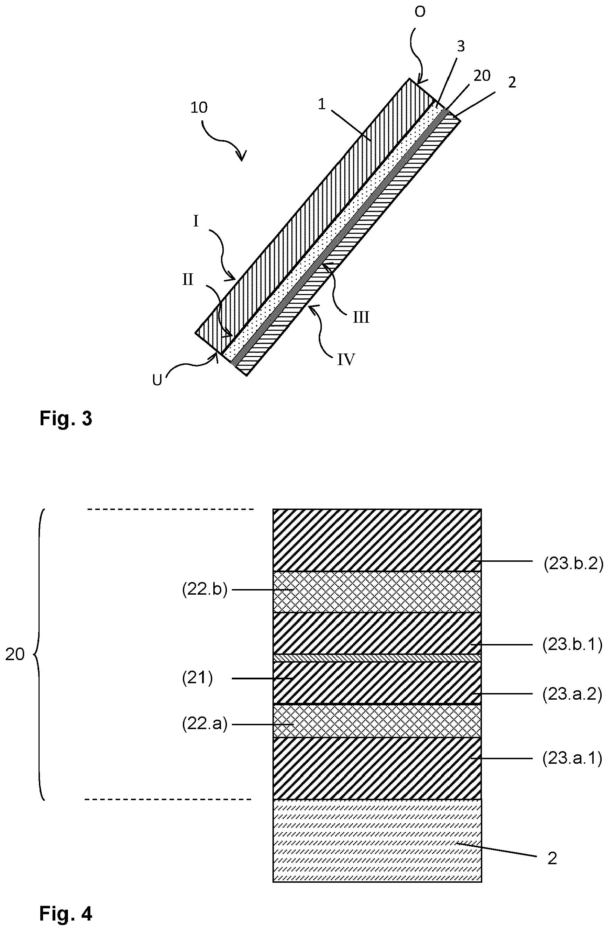

Fig. 3 zeigt eine Ausgestaltung einer erfindungsgemäß ausgebildeten Windschutzscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Fig. 4 zeigt die Schichtenfolge einer vorteilhaften Ausgestaltung der erfindungsgemäßen Reflexionsbeschichtung 20. Die Reflexionsbeschichtung 20 ist ein Stapel von Dünnschichten, bestehend aus eine elektrisch leitfähigen Schicht 21, insgesamt vier dielektrischen, optisch hochbrechenden Schichten 23 (23.a.1, 23.a.2, 23.b.1, 23.b.2) und insgesamt zwei optisch niedrigbrechenden Schichten 22 (22.a, 22.b). Die elektrisch leitfähige Schicht 21 ist zentral im Dünnschichtstapel angeordnet. Unterhalb der elektrisch leitfähigen Schicht 21 sind zwei hochbrechende Schichten 23.a.1, 23.a.2 und eine niedrigbrechende Schicht 22.a alternierend auf dem Substrat (Innenscheibe 2) abgeschieden. Auch oberhalb der elektrisch leitfähigen Schicht 21 sind zwei hochbrechende Schichten 23.b.1, 23.b.2 und eine niedrigbrechende Schicht 22.b alternierend abgeschieden. Die optisch hochbrechenden Schichten 23.a.1, 23.a.2, 23.b.1, 23.b.2 sind auf Basis von Siliziumnitrid (SiN) ausgebildet, die optisch niedrigbrechenden Schichten 22.a, 22.b auf Basis von Siliziumoxid (SiO) und die elektrisch leitfähige Schicht 21 auf Basis von Silber (Ag).

Die Schichtenabfolge ist schematisch der Figur zu entnehmen. Die Schichtenfolgen einer Windschutzscheibe 10 mit der Reflexionsbeschichtung 20 auf der außenseitigen Oberfläche III der Innenscheibe 2 gemäß der erfindungsgemäßen Beispiele 1 bis 5 sind außerdem, zusammen mit den Materialien und Schichtdicken der Einzelschichten, in Tabelle 1 dargestellt. Die SiN- und SiO-Schichten können unabhängig voneinander dotiert sein, beispielsweise mit Bor oder Aluminium.

**Tabelle 1**

| Material | Bezugszeichen | | Schichtdicke | | | | |
|---|---|---|---|---|---|---|---|
| | | | Beispiel 1 | Beispiel 2 | Beispiel 3 | Beispiel 4 | Beispiel 5 |
| Kalk-Natron-Glas | 1 | | 2,1 mm | 2,1 mm | 2,1 mm | 2,1 mm | 2,1 mm |
| PVB | 3 | | 0,76 mm | 0,76 mm | 0,76 mm | 0,76 mm | 0,76 mm |
| SiN | 20 | 23.b.2 | 262 nm | 262 nm | 262 nm | 262 nm | 262 nm |
| SiO | | 22.b | 214 nm | 214 nm | 214 nm | 214 nm | 214 nm |
| SiN | | 23.b.1 | 196 nm | 196 nm | 196 nm | 196 nm | 196 nm |
| **Ag** | | **21** | **8 nm** | **10 nm** | **12 nm** | **13 nm** | **14 nm** |
| SiN | | 23.a.2 | 206 nm | 206 nm | 206 nm | 206 nm | 206 nm |
| SiO | | 22.a | 22 nm | 22 nm | 22 nm | 22 nm | 22 nm |
| SiN | | 23.a.1 | 298 nm | 298 nm | 298 nm | 298 nm | 298 nm |
| Kalk-Natron-Glas | 2 | | 1,6 mm | 1,6 mm | 1,6 mm | 1,6 mm | 1,6 mm |

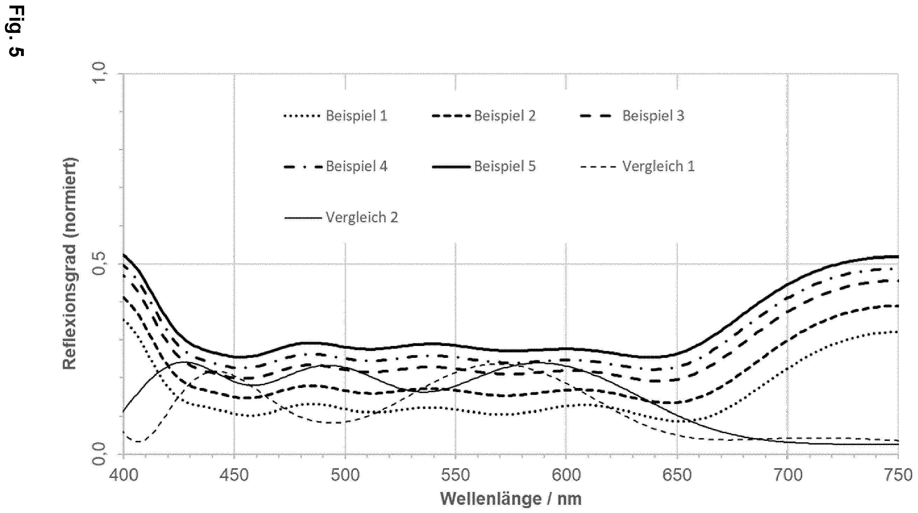

Fig. 5 zeigt Reflexionsspektren einer Verbundscheibe 10 wie in Figur 3, jeweils mit einem Schichtaufbau gemäß der erfindungsgemäßen Beispiele 1 bis 5 nach Tabelle 1 sowie gemäß zweier Vergleichsbeispiels (Vergleich 1, Vergleich 2) nach Tabelle 2. Die Vergleichsbeispiele wiesen als Reflexionsbeschichtung 20 rein dielektrische Schichtaufbauten auf aus alternierend angeordneten optisch hochbrechenden und optisch niedrigbrechenden Schichten. Es wurden dabei die gleichen Materialien verwendet wie für die dielektrischen Schichten der erfindungsgemäßen Beispiele und die Schichtdicken wurden ebenfalls optimiert auf möglichst gute Reflexionseigenschaften gegenüber p-polarisierter Strahlung im Spektralbereich von 450 nm bis 650 nm. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe (die sogenannte innenraumseitige Reflexion) unter einem Einstrahlwinkel von 65° zur innenraumseitigen Flächennormalen. Die Reflexionsmessung ist also der Situation in der Projektionsanordnung angenähert.

**Tabelle 2**

| Material | Bezugszeichen | Schichtdicke | |
|---|---|---|---|
| | | Vergleichsbeispiel 1 | Vergleichsbeispiel 2 |
| Kalk-Natron-Glas | 1 | 2,1 mm | 2,1 mm |
| PVB | 3 | 0,76 mm | 0,76 mm |
| SiN | 20 | 171 nm | 69 nm |
| SiO | | 28 nm | 37 nm |
| SiN | | 86 nm | 146 nm |
| SiO | | 42 nm | 56 nm |
| SiN | | 77 nm | 97 nm |
| SiO | | 178 nm | 111 nm |
| SiN | | 46 nm | 73 nm |
| SiO | | 90 nm | 84 nm |
| SiN | | 176 nm | 36 nm |
| SiO | | 18 nm | 71 nm |
| SiN | | 81 nm | 215 nm |
| Kalk-Natron-Glas | 2 | 1,6 mm | 1,6 mm |

Der gemittelte Reflexionsgrad gegenüber p-polarisierter Strahlung sowie die Differenzen der Maximal- und Minimalwerte zum gemittelten Reflexionsgrad der Beispiele 1 bis 5 sind in Tabelle 3 zusammengefasst, die entsprechenden Werte für die Vergleichsbeispiel 1 und 2 in Tabelle 4. In Tabelle 3 sind auch die Werte für die Lichttransmission der Verbundscheiben nach ISO 9050.

**Tabelle 3**

| | Beispiel 1 | Beispiel 2 | Beispiel 3 | Beispiel 4 | Beispiel 5 |
|---|---|---|---|---|---|
| gemittelten Reflexionsgrad gegenüber p-polarisierter Strahlung, 450nm-650 nm | 11,4% | 16,0% | 21,5% | 24,4% | 27,4% |
| Differenz zwischen dem maximal auftretenden Reflexionsgrad und dem Mittelwert | 1,7% | 1,9% | 1,9% | 1,8% | 1,8% |
| Differenz zwischen dem minimal auftretenden Reflexionsgrad und dem Mittelwert | 2,8% | 2,6% | 2,4% | 2,2% | 2,1% |
| Lichttransmission T_{L} | 82,3% | 78,4% | 73,6% | 71,0% | 68,3 |

**Tabelle 4**

| | Vergleichsbeispiel 1 | Vergleichsbeispiel 2 |
|---|---|---|
| gemittelten Reflexionsgrad gegenüber p-polarisierter Strahlung, 450nm-650 nm | 15,0% | 19,6% |
| Differenz zwischen dem maximal auftretenden Reflexionsgrad und dem Mittelwert | 8,7% | 4,3% |
| Differenz zwischen dem minimal auftretenden Reflexionsgrad und dem Mittelwert | 10,0% | 9,4% |

Mit den rein dielektrischen Aufbauten der Vergleichsbeispiele sind zwar auch relativ hohe gemittelte Reflexionswerte erreichbar, jedoch sind die Spektren im relevanten Spektralbereich von 450 nm bis 650 nm starken Schwankungen unterworfen, was zu unerwünschten Farbverschiebungen des HUD-Bildes führen kann. Im Gegensatz dazu bewirkt die elektrisch leitfähige Schicht 21 der erfindungsgemäßen Beispiele eine deutliche Glättung des Reflexionsspektrums, was zu einer farbneutraleren Widergabe des Projektorbildes führt. Außerdem sind noch höhere Reflexionswerte erreichbar, insbesondere mit zunehmender Dicke der leitfähigen Schicht 21.

### Bezugszeichenliste:

- (10): Windschutzscheibe

- (1): Außenscheibe
- (2): Innenscheibe
- (3): thermoplastische Zwischenschicht
- (4): Projektor/ HUD-Projektor
- (5): Betrachter / Fahrzeugfahrer

- (20): Reflexionsbeschichtung
- (21): elektrisch leitfähige Schicht
- (22): optisch niedrigbrechende Schicht
- (22.a), (22.b): optisch niedrigbrechende Schichten
- (23): optisch hochbrechende Schicht
- (23.a.1), (23.a.2), (23.b.1), (23.b.2): optisch hochbrechende Schichten

- (O): Oberkante der Windschutzscheibe 10
- (U): Unterkante der Windschutzscheibe 10
- (B): HUD-Bereich der Windschutzscheibe 10
- (E): Eyebox

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Windschutzscheibe (10), umfassend eine Außenscheibe (1) und eine Innenscheibe (2), die über eine thermoplastische Zwischenschicht (3) miteinander verbunden sind, mit einem HUD-Bereich (B); und
- einen HUD-Projektor (4), der auf den HUD-Bereich (B) gerichtet ist;
wobei
- die Strahlung des HUD-Projektors (4) einen p-polarisierten Strahlungsanteil von größer als 50% aufweist und
- die Windschutzscheibe (10) mit einer Reflexionsbeschichtung (20) versehen ist, die geeignet ist, p-polarisierte Strahlung zu reflektieren;
und wobei
- die Reflexionsbeschichtung (20) genau eine elektrisch leitfähige Schicht (21) aufweist und
- oberhalb und unterhalb der elektrisch leitfähigen Schicht (21) jeweils eine dielektrische Schichtenfolge angeordnet ist aus n optisch niedrigbrechenden Schichten (22) mit einem Brechungsindex kleiner 1,8 und (n+1) optisch hochbrechenden Schichten (21) mit einem Brechungsindex größer 1,8, die jeweils alternierend angeordnet sind, wobei n eine ganze Zahl größer oder gleich 1 ist.

2. Projektionsanordnung nach Anspruch 1, wobei die Windschutzscheibe (10) mit der Reflexionsbeschichtung (20) im Spektralbereich von 450 nm bis 650 nm einen gemittelten Reflexionsgrad gegenüber p-polarisierter Strahlung von mindestens 10% aufweist, bevorzugt mindestens 15%, besonders bevorzugt von mindestens 20%.

3. Projektionsanordnung nach Anspruch 2, wobei im Spektralbereich von 450 nm bis 650 nm die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades gegenüber p-polarisierter Strahlung höchstens 5 % beträgt, bevorzugt höchstens 3 %.

4. Projektionsanordnung nach einem der Ansprüche 1 bis 3, wobei die Strahlung des HUD-Projektors (4) im Wesentlichen rein p-polarisiert ist.

5. Projektionsanordnung nach einem der Ansprüche 1 bis 4, wobei die Strahlung des HUD-Projektors (4) mit einem Einfallswinkel von 60° bis 70° auf die Windschutzscheibe (10) trifft.

6. Projektionsanordnung nach einem der Ansprüche 1 bis 5, wobei die elektrisch leitfähige Schicht (21) auf Basis von Silber ausgebildet ist.

7. Projektionsanordnung nach einem der Anspruch 1 bis 6, wobei die elektrisch leitfähige Schicht (21) eine Dicke von höchstens 15 nm aufweist und bevorzugt von mindestens 5 nm.

8. Projektionsanordnung nach einem der Anspruch 1 bis 7, wobei die optisch niedrigbrechenden Schichten (22) auf Basis von Siliziumoxid, Aluminiumoxid, Magnesiumfluorit, Siliziumoxinitrid oder Calciumfluorit ausgebildet sind, bevorzugt auf Basis von Siliziumoxid.

9. Projektionsanordnung nach einem der Anspruch 1 bis 8, wobei die optisch hochbrechenden Schichten (23) auf Basis von Siliziumnitrid, Zinn-Zink-Oxid, Silizium-Zirkonium-Nitrid, Zirkoniumoxid, Nioboxid, Hafniumoxid, Tantaloxid, Wolframoxid, Titanoxid, Siliziumkarbid oder Diamond-like carbon (DLC) ausgebildet sind, bevorzugt auf Basis von Siliziumnitrid.

10. Projektionsanordnung nach einem der Ansprüche 1 bis 9, wobei n gleich 1 ist.

11. Projektionsanordnung nach einem der Ansprüche 1 bis 10, wobei die Reflexionsbeschichtung (20) folgende Schichten umfasst:
- eine optisch hochbrechende Schicht (23.a.1) auf Basis von Siliziumnitrid, Zinn-Zink-Oxid, Silizium-Zirkonium-Nitrid oder Titanoxid, bevorzugt Siliziumnitrid, mit einer Dicke von 235 nm bis 355 nm, bevorzugt von 270 nm bis 320 nm,
- darüber eine optisch niedrigbrechende Schicht (22.a) auf Basis von Siliziumdioxid mit einer Dicke von 15 nm bis 30 nm, bevorzugt von 20 bis 25 nm,
- darüber eine optisch hochbrechende Schicht (23.a.2) auf Basis von Siliziumnitrid, Zinn-Zink-Oxid, Silizium-Zirkonium-Nitrid oder Titanoxid, bevorzugt Siliziumnitrid, mit einer Dicke von 165 nm bis 245 nm, bevorzugt von 185 nm bis 225 nm,
- darüber die elektrisch leitfähige Schicht (21),
- darüber eine optisch hochbrechende Schicht (23.b.1) auf Basis von Siliziumnitrid, Zinn-Zink-Oxid, Silizium-Zirkonium-Nitrid oder Titanoxid, bevorzugt Siliziumnitrid, mit einer Dicke von 155 nm bis 235 nm, bevorzugt von 175 nm bis 215 nm,
- darüber eine optisch niedrigbrechende Schicht (22.b) auf Basis von Siliziumdioxid mit einer Dicke von 170 nm bis 255 nm, bevorzugt von 190 bis 235 nm,
- darüber eine optisch hochbrechende Schicht (23.b.2) auf Basis von Siliziumnitrid, Zinn-Zink-Oxid, Silizium-Zirkonium-Nitrid oder Titanoxid, bevorzugt Siliziumnitrid, mit einer Dicke von 210 nm bis 315 nm, bevorzugt von 235 nm bis 290 nm.

12. Projektionsanordnung nach Anspruch 11, wobei die elektrisch leitfähige Schicht (21) auf Basis von Silber ausgebildet ist mit einer Dicke von 5 nm bis 15 nm, insbesondere von 8 nm bis 13 nm.

13. Projektionsanordnung nach einem der Ansprüche 1 bis 12, wobei die externen, von der Zwischenschicht (3) abgewandten Oberflächen (I, IV) der Windschutzscheibe (10) im Wesentlichen parallel zueinander angeordnet sind.

14. Projektionsanordnung nach einem der Ansprüche 1 bis 13, wobei die Reflexionsbeschichtung (20) auf der zur Zwischenschicht (3) hingewandten Oberfläche (II, III) der Außenscheibe (1) oder der Innenscheibe (2) oder innerhalb der Zwischenschicht (3) angeordnet ist.

15. Verwendung einer Projektionsanordnung nach einem der Ansprüche 1 bis 14 als HUD in einem Kraftfahrzeug, insbesondere einem Personenkraftwagen oder Lastkraftwagen.

## Claims

1. Projection assembly for a head-up display (HUD), at least comprising
- a windshield (10) comprising an outer pane (1) and an inner pane (2), which are connected to one another via a thermoplastic intermediate layer (3), and having a HUD region (B); and
- an HUD projector (4) which is directed towards the HUD region (B);
wherein
- the radiation of the HUD projector (4) has a p-polarised radiation component of greater than 50%, and
- the windshield (10) is provided with a reflective coating (20) which is suitable for reflecting p-polarised radiation;
and wherein
- the reflective coating (20) has exactly one electrically conductive layer (21), and
- in each case one dielectric layer sequence is arranged above and below the electrically conductive layer (21), which sequence consists of n low-optical-refraction layers (22) having a refractive index of less than 1.8 and (n+1) high-optical-refraction layers (21) having a refractive index of greater than 1.8, which are in each case arranged alternately, where n is an integer greater than or equal to 1.

2. Projection assembly according to claim 1, wherein the windshield (10) having the reflective coating (20), in the spectral range from 450 nm to 650 nm, has an average reflectance with respect to p-polarised radiation of at least 10%, preferably at least 15%, particularly preferably at least 20%.

3. Projection assembly according to claim 2, wherein in the spectral range from 450 nm to 650 nm, the difference between the maximum reflectance and the mean value of the reflectance as well as the difference between the minimum reflectance and the mean value of the reflectance is at most 5%, particularly preferably at most 3%.

4. Projection assembly according to any of claims 1 to 3, wherein the radiation of the HUD projector (4) is substantially purely p-polarised.

5. Projection assembly according to any of claims 1 to 4, wherein the radiation of the HUD projector (4) strikes the windshield (10) at an angle of incidence of 60° to 70°.

6. Projection assembly according to any of claims 1 to 5, wherein the electrically conductive layer (21) is based on silver.

7. Projection assembly according to any of claims 1 to 6, wherein the electrically conductive layer (21) has a thickness of at most 15 nm and preferably at least 5 nm.

8. Projection assembly according to any of claims 1 to 7, wherein the low-optical-refraction layers (22) are based on silicon oxide, aluminium oxide, magnesium fluorite, silicon oxynitride or calcium fluorite, preferably on silicon oxide.

9. Projection assembly according to any of claims 1 to 8, wherein the high-optical-refraction layers (23) are based on silicon nitride, tin zinc oxide, silicon zirconium nitride, zirconium oxide, niobium oxide, hafnium oxide, tantalum oxide, tungsten oxide, titanium oxide, silicon carbide or diamond-like carbon (DLC), preferably based on silicon nitride.

10. Projection assembly according to any of claims 1 to 9, wherein n equals 1.

11. Projection assembly according to any of claims 1 to 10, wherein the reflective coating (20) comprises the following layers:
- a high-optical-refraction layer (23.a.1) based on silicon nitride, tin zinc oxide, silicon zirconium nitride or titanium oxide, preferably silicon nitride, having a thickness of 235 nm to 355 nm, preferably of 270 nm to 320 nm,
- thereupon, a low-optical-refraction layer (22.a) based on silicon dioxide, having a thickness of 15 nm to 30 nm, preferably of 20 nm to 25 nm,
- thereupon, a high-optical-refraction layer (23.a.2) based on silicon nitride, tin zinc oxide, silicon zirconium nitride or titanium oxide, preferably silicon nitride, having a thickness of 165 nm to 245 nm, preferably of 185 nm to 225 nm,
- thereupon, the electrically conductive layer (21),
- thereupon, a high-optical-refraction layer (23.b.1) based on silicon nitride, tin zinc oxide, silicon zirconium nitride or titanium oxide, preferably silicon nitride, having a thickness of 155 nm to 235 nm, preferably of 175 nm to 215 nm,
- thereupon, a low-optical-refraction layer (22.b) based on silicon dioxide, having a thickness of 170 nm to 255 nm, preferably of 190 nm to 235 nm,
- thereupon, a high-optical-refraction layer (23.b.2) based on silicon nitride, tin zinc oxide, silicon zirconium nitride or titanium oxide, preferably silicon nitride, having a thickness of 210 nm to 315 nm, preferably of 235 nm to 290 nm.

12. Projection assembly according to claim 11, wherein the electrically conductive layer (21) is based on silver, having a thickness of 5 nm to 15 nm, in particular from 8 nm to 13 nm.

13. Projection assembly according to any of claims 1 to 12, wherein the external surfaces (I, IV) of the windshield (10) which face away from the intermediate layer (3) are arranged substantially in parallel with one another.

14. Projection assembly according to any of claims 1 to 13, wherein the reflective coating (20) is arranged on the surface (II, III) of the outer pane (1) or the inner pane (2) that faces the intermediate layer (3) or within the intermediate layer (3).

15. Use of a projection assembly according to any of claims 1 to 14 as a HUD in a motor vehicle, in particular a passenger car or lorry.

## Revendications

1. Système de projection pour un affichage tête haute (HUD), comprenant au moins
- un pare-brise (10), comprenant une vitre externe (1) et une vitre interne (2) qui sont reliées entre elles par l'intermédiaire d'une couche intermédiaire (3) thermoplastique, le pare-brise comportant une zone HUD (B) ; et
- un projecteur HUD (4) qui est dirigé vers la zone HUD (B) ;
dans lequel
- le rayonnement du projecteur HUD (4) présente une part de rayonnement polarisé p supérieure à 50 % et
- le pare-brise (10) est pourvu d'un revêtement réfléchissant (20) adapté pour réfléchir un rayonnement polarisé p ;
et dans lequel
- le revêtement réfléchissant (20) présente exactement une couche électroconductrice (21) et
- au-dessus et au-dessous de la couche électroconductrice (21) est disposée respectivement une succession de couches diélectriques constituée de *n* couches à faible réfraction optique (22) comportant un indice de réfraction inférieur à 1,8 et de (*n* + 1) couches à haute réfraction optique (21) comportant un indice de réfraction supérieur à 1,8, lesquelles sont respectivement disposées en alternance, dans lequel n est un nombre entier supérieur ou égal à 1.

2. Système de projection selon la revendication 1, dans lequel le pare-brise (10) comportant le revêtement réfléchissant (20) présente, dans le domaine spectral allant de 450 nm à 650 nm, un facteur de réflexion moyen d'au moins 10 %, de préférence d'au moins 15 %, de manière particulièrement préférée d'au moins 20 %, par rapport au rayonnement polarisé p.

3. Système de projection selon la revendication 2, dans lequel, dans le domaine spectral allant de 450 nm à 650 nm, la différence entre le facteur de réflexion sortant maximal et la valeur moyenne du facteur de réflexion, ainsi que la différence entre le facteur de réflexion sortant minimal et la valeur moyenne du facteur de réflexion sont, par rapport au rayonnement polarisé p, de 5 % au maximum, de préférence de 3 % au maximum.

4. Système de projection selon l'une des revendications 1 à 3, dans lequel le rayonnement du projecteur HUD (4) est sensiblement purement polarisé p.

5. Système de projection selon l'une des revendications 1 à 4, dans lequel le rayonnement du projecteur HUD (4) frappe le pare-brise (10) à un angle d'incidence allant de 60° à 70°.

6. Système de projection selon l'une des revendications 1 à 5, dans lequel la couche électroconductrice (21) est formée à base d'argent.

7. Système de projection selon l'une des revendications 1 à 6, dans lequel la couche électroconductrice (21) présente une épaisseur de 15 nm au maximum et de préférence d'au moins 5 nm.

8. Système de projection selon l'une des revendications 1 à 7, dans lequel les couches à faible réfraction optique (22) sont formées à base d'oxyde de silicium, oxyde d'aluminium, fluorine de magnésium, oxynitrure de silicium ou fluorine de calcium, de préférence à base d'oxyde de silicium.

9. Système de projection selon l'une des revendications 1 à 8, dans lequel les couches à haute réfraction optique (23) sont formées à base de nitrure de silicium, oxyde d'étain-zinc, nitrure de silicium-zirconium, oxyde de zirconium, oxyde de niobium, oxyde d'hafnium, oxyde de tantale, oxyde de tungstène, oxyde de titane, carbure de silicium ou carbone de type diamant (diamond-like carbon, DLC), de préférence à base de nitrure de silicium.

10. Système de projection selon l'une des revendications 1 à 9, dans lequel *n* est égal à 1.

11. Système de projection selon l'une des revendications 1 à 10, dans lequel le revêtement réfléchissant (20) comprend les couches suivantes :
- une couche à haute réfraction optique (23.a.1) à base de nitrure de silicium, oxyde d'étain-zinc, nitrure de silicium-zirconium ou oxyde de titane, de préférence de nitrure de silicium, comportant une épaisseur allant de 235 nm à 355 nm, de préférence de 270 nm à 320 nm,
- par-dessus, une couche à faible réfraction optique (22.a) à base de dioxyde de silicium comportant une épaisseur allant de 15 nm à 30 nm, de préférence de 20 à 25 nm,
- par-dessus, une couche à haute réfraction optique (23.a.2) à base de nitrure de silicium, oxyde d'étain-zinc, nitrure de silicium-zirconium ou oxyde de titane, de préférence de nitrure de silicium, comportant une épaisseur allant de 165 nm à 245 nm, de préférence de 185 nm à 225 nm,
- par-dessus, la couche électroconductrice (21),
- par-dessus, une couche à haute réfraction optique (23.b.1) à base de nitrure de silicium, oxyde d'étain-zinc, nitrure de silicium-zirconium ou oxyde de titane, de préférence de nitrure de silicium, comportant une épaisseur allant de 155 nm à 235 nm, de préférence de 175 nm à 215 nm,
- par-dessus, une couche à faible réfraction optique (22.b) à base de dioxyde de silicium comportant une épaisseur allant de 170 nm à 255 nm, de préférence de 190 à 235 nm,
- par-dessus, une couche à haute réfraction optique (23.b.2) à base de nitrure de silicium, oxyde d'étain-zinc, nitrure de silicium-zirconium ou oxyde de titane, de préférence de nitrure de silicium, comportant une épaisseur allant de 210 nm à 315 nm, de préférence de 235 nm à 290 nm.

12. Système de projection selon la revendication 11, dans lequel la couche électroconductrice (21) est formée à base d'argent et comporte une épaisseur allant de 5 nm à 15 nm, en particulier de 8 nm à 13 nm.

13. Système de projection selon l'une des revendications 1 à 12, dans lequel les surfaces (I, IV) externes du pare-brise (10), lesquelles sont opposées à la couche intermédiaire (3), sont disposées sensiblement parallèlement l'une à l'autre.

14. Système de projection selon l'une des revendications 1 à 13, dans lequel le revêtement réfléchissant (20) est disposé sur la surface (II, III) de la vitre externe (1) ou de la vitre interne (2), laquelle surface est orientée vers la couche intermédiaire (3), ou à l'intérieur de la couche intermédiaire (3).

15. Utilisation d'un système de projection selon l'une des revendications 1 à 14 en tant que HUD dans un véhicule automobile, en particulier une voiture particulière ou un camion.
